# EUROPÄISCHE PATENTANMELDUNG

(11) **EP 1 084 991 A2**
(43) Veröffentlichungstag der Anmeldung: **21.03.2001**
(21) Anmeldenummer: 00119232.7
(22) Anmeldetag: 06.09.2000
(51) Int. Cl.: C01B 3/38, C01B 3/32, B01J 8/02, B01J 12/00

(54) **Reaktorsystem mit elektrischen Heizmitteln**

(30) Priorität: 17.09.1999 DE 19944540
(71) Anmelder: DaimlerChrysler AG, 70567 Stuttgart (DE)
(72) Erfinder: Autenrieth, Rainer, 71723 Grossbottwar (DE); Docter, Andreas, Dr., 89077 Ulm (DE); Wiesheu, Norbert, 89312 Günzburg (DE)

(57) **Zusammenfassung**

Die Erfindung betrifft ein Reaktorsystem zur Umsetzung eines Kohlenwasserstoff- oder Kohlenwasserstoffderivat-Einsatzstoffs mit einem katalysatorbelegten Reaktionsraum, dem ein Reaktionseduktstrom über einen Reaktionsraumeintritt zuführbar ist, und mit elektrischen Heizmitteln.

Erfindungsgemäß ist am Reaktionsraumeintritt eine flächige, elektrisch beheizbare, katalysatorbelegte und für den Reaktionseduktstrom durchlässige Heizvorrichtung vorgesehen, die den Eintrittsquerschnitt des Reaktionsraumeintritts wenigstens teilweise abdeckt und durch die wenigstens in einer Startbetriebsphase des Reaktorsystems Edukte für die Kohlenwasserstoffumsetzung zuführbar sind, bzw. es sind vor dem Reaktionsraumeintritt eine elektrische Heizvorrichtung zum Aufheizen wenigstens eines Reaktionseduktes in einer Startbetriebsphase und Mittel zum punktuellen Einbringen des wenigstens einen in der Heizvorrichtung aufgeheizten Reaktionseduktes in den Reaktionsraum vorgesehen.

Verwendung z.B. als Reaktorsystem zur Wasserstofferzeugung für Brennstoffzellenfahrzeuge.

## Beschreibung

Die Erfindung betrifft ein Reaktorsystem zur Umsetzung eines Kohlenwasserstoff- oder Kohlenwasserstoffderivat-Einsatzstoffs nach dem Oberbegriff des Anspruchs 1 bzw. 4.

In der EP 0 757 968 A1 ist ein Reformierungsreaktor beschrieben, der zur katalytischen Verbrennung von Methanol und Sauerstoff bzw. sauerstoffhaltigem Gas in einem Reaktionsraum dient. Für die katalytische Verbrennung werden die Reaktionsedukte über einen in das Innere des katalysatorbefüllten Reaktionsraums ragenden Versorgungskanal einem inneren Bereich des Reaktionsraums zugeführt. Im Bereich der Öffnung des Versorgungskanals im Inneren des Reaktionsraums befindet sich eine elektrische Heizwendel, mit der in einer Aufwärmbetriebsphase Katalysatormaterial, das sich an der Öffnung befindet, schnell auf eine für die katalytische Reaktion geeignete Temperatur gebracht werden kann. Reaktionsedukte, die durch die Öffnung des Versorgungskanales in den Reaktionsraum gelangen, werden durch die im Bereich der Heizwendel ablaufende exotherme Reaktion erwärmt und führen so zu einem Erhitzen der übrigen Bereiche des Reaktionsraumes. Ist nach einer Anlaufbetriebsphase im gesamten Reaktionsraum eine gewünschte Betriebstemperatur erreicht, kann die Heizwendel abgeschaltet werden.

In der DE 33 45 958 A1 ist ein wasserstofferzeugender Reformierungsreaktor zur Reformierung von Methanol beschrieben, der einen Brenner umfaßt, in dem zugeführtes Methanol mit Luft in einer Startbetriebsphase verbrannt wird, um so den Reformierungsreaktor schnell auf eine günstige Betriebstemperatur aufzuheizen.

Die US 3 982 910 offenbart einen wasserstofferzeugenden, katalytischen Reaktor zur Umsetzung eines Kohlenwasserstoffs unter Beimischung von Luft. In einer Aufwärmbetriebsphase wird in den Reaktor über eine Brenndüse flüssiger Kohlenwasserstoff sowie Luft zugeführt und durch eine Zündkerze gezündet. Aufgrund der exothermen Verbrennungsreaktion erreicht der Reformierungsreaktor dann schnell seine Betriebstemperatur, wonach er zur partiellen Oxidation von verdampftem Kohlenwasserstoff dient.

Aus der JP 3-218902 (A) ist ein wasserstofferzeugender, katalytischer Reformierungsreaktor zur Reformierung von dampfförmigem Methanol bekannt. Der Reformierungsreaktor enthält einen katalytischen Brenner, in dem während einer Aufwärm-Betriebsphase ein Methanoldampf-Luft-Gemisch verbrannt wird, um schnell eine günstige Arbeitstemperatur für das in den Reformierungsreaktor geleitete, zu reformierende Gasgemisch zu erreichen.

Weiter ist in der JP 7-315802 (A) ein wasserstofferzeugender, katalytischer Reformierungsreaktor beschrieben, dem eine elektrisch betriebene Heizeinrichtung zugeordnet ist. Letztere umfaßt Heizwiderstände, die in das Katalysatormaterial im Reformierungsreaktor eingebettet sind und mittels einer Batterie gespeist werden. Durch Betreiben der Heizeinrichtung in einer Startbetriebsphase soll der Reformierungsreaktor mit seinem gesamten Reaktorvolumen schnell auf eine für die Reformierungsreaktion günstige Temperatur gebracht werden. In ähnlicher Weise offenbart die JP 58-219945 (A) einen zylindrischen Reformierungskatalysatorkörper mit gitterförmiger Querschnittsstruktur, deren Öffnungen von elektrischen Heizdrähten durchzogen sind, um den reaktionsraumbildenden Katalysatorkörper schnell auf Betriebstemperatur zu bringen.

In der Offenlegungsschrift EP 0 913 357 A1 ist ein gattungsgemäßes Reaktorsystem offenbart, bei dem die elektrische Heizvorrichtung von einem katalysatorbelegten und für den Reaktionseduktstrom durchlässigen Heizkörper mit z.B. poröser oder wabenförmiger Struktur gebildet ist, der mit Abstand vor dem Reaktionsraumeintritt eines katalysatorbelegten Reaktionsraums angeordnet ist, der von einem Katalysatorkörper gebildet ist, welcher mit dem Heizkörper in einem gemeinsamen Gehäuse untergebracht ist. Alternativ kann der Heizkörper entfallen und der Katalysatorkörper selbst elektrisch beheizbar ausgelegt sein. Ähnliche Reaktorsysteme mit einem reaktionsraumbildenden Katalysatorkörper und einem diesem mit Abstand vorgeschalteten elektrischen Heizkörper sind in der nachveröffentlichten Offenlegungsschrift EP 0 967 174 A1 und der Offenlegungsschrift GB 2 268 694 A beschrieben.

Aufgabe der Erfindung ist, ein Reaktorsystem der eingangs genannten Art zu schaffen, das ein gutes Kaltstartverhalten hat.

Diese Aufgabe wird durch ein Reaktorsystem gemäß Anspruch 1 oder Anspruch 4 gelöst.

Beim Reaktorsystem nach Anspruch 1 ist am Reaktionsraumeintritt eine flächige, elektrisch beheizbare, katalysatorbelegte und für den Reaktionseduktstrom durchlässige Heizvorrichtung vorgesehen, die den Eintrittsquerschnitt des Reaktionsraumeintritts wenigstens teilweise abdeckt und durch die wenigstens in einer Startbetriebsphase des Reaktorsystems Edukte für die Umsetzung des Einsatzstoffs zuführbar sind. Beim Reaktorsystem nach Anspruch 4 sind vor dem Reaktionsraumeintritt eine elektrische Heizvorrichtung zum Aufheizen wenigstens eines Reaktionseduktes in einer Startbetriebsphase und Mittel zum punktuellen Einbringen des wenigstens einen in der Heizvorrichtung aufgeheizten Reaktionseduktes in den Reaktionsraum vorgesehen. Erfindungsgemäß wird somit in einer Startbetriebsphase ein besonders effizientes, schnelles Erwärmen des Reaktorsystems auf Betriebstemperatur ermöglicht.

In Weiterbildung des Reaktorsystems nach Anspruch 2 weist die Heizvorrichtung mehrere Heizelemente auf, die zusammen den Eintrittsquerschnitt des Reaktionsraumes ganz oder teilweise abdecken. Auf diese Weise kann unter Einsatz von wenig elektrischer Heizenergie verteilt über den Eintrittsquerschnitt an mehreren Punkten eine katalytische Verbrennungsreaktion ausgelöst werden, wobei die dabei anfallende Wärme aufgrund Wärmeleitung sich schnell auf den gesamten Reaktionsraum des Reaktorsystems ausbreitet.

In Weiterbildung des Reaktorsystems nach Anspruch 3 weist die Heizvorrichtung eine Heizscheibe auf, die den Eintrittsquerschnitt des Reaktionsraumes vollständig abdeckt. Auf diese Weise kann ein Reaktorsystem geschaffen werden, das im Kaltstartfall vergleichsweise schnell auf Betriebstemperatur gebracht werden kann.

In Weiterbildung des Reaktorsystems nach Anspruch 5 umfaßt dieses ein schaltbares Reaktionsedukt-Zufuhrsystem mit Zufuhrmitteln, die den Reaktionseduktstrom in einem Startbetriebsmodus dem Reaktionsraum nur über einen Teil des Eintrittsquerschnittes desselben und in einem Normalbetriebsmodus über den gesamten Eintrittsquerschnitt zuführen. Auf diese Weise kann die Zufuhr von Reaktionsedukten dem unterschiedlichen Bedarf im Startbetriebsmodus einerseits und im Normalbetriebsmodus andererseits angepaßt werden.

Weitere Merkmale und Vorteile der Erfindung sind in den Zeichnungen dargestellt und werden nachfolgend beschrieben. Es zeigen:
- Fig. 1a und 1b: schematische Seitenansichten eines ersten Ausführungsbeispiels eines Reaktorsystems zur Umsetzung eines Kohlenwasserstoff- oder Kohlenwasserstoffderivat-Einsatzstoffes in einer Startbetriebsphase bzw. einer Normalbetriebsphase,
- Fig. 2, 3 und 4: schematische Seitenansichten weiterer Ausführungsbeispiele von Reaktorsystemen.

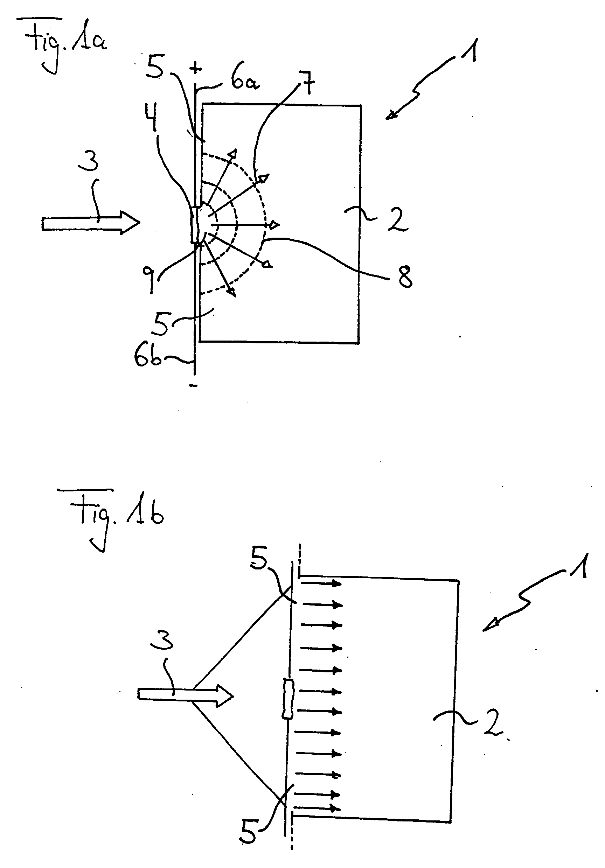

In Fig. 1a ist ein Reaktorsystem 1 zur beispielsweise autothermen Reformierung eines Kohlenwasserstoffs bzw. Kohlenwasserstoffderivats, wie Methanol, in einer Startbetriebsphase dargestellt, das einen Reaktionsraum 2 aufweist. Dieser enthält ein nicht weiter dargestelltes, geeignetes Katalysatormaterial. Wird das Katalysatormaterial bei geeigneter Temperatur einer Mischung von Luft, Wasser und Kohlenwasserstoff bzw. Kohlenwasserstoffderivat als Reaktionsedukten ausgesetzt, so bildet sich im Rahmen einer katalytischen Reaktion ein H₂-reiches Gas, das, gegebenenfalls nach weiterer Aufbereitung, zum Betrieb einer Brennstoffzelle etwa für ein Brennstoffzellenfahrzeug herangezogen werden kann. Für einen effektiven Ablauf der katalytischen Reaktion am Katalysatormaterial ist eine gewisse, über Raumtemperatur liegende Mindestemperatur erforderlich.
Um beim Kaltstart den kalten, sich auf Umgebungstemperatur befindlichen Reaktionsraum 2 schnell auf die Betriebstemperatur zu bringen, wird ein Reaktionseduktgemisch 3 über eine für den flüssigen oder gasförmigen Gemischstrom durchlässige elektrische Heizvorrichtung 4 dem Reaktionsraum 2 zugeführt. Die Heizvorrichtung 4 deckt platten- bzw. scheibenförmig den Eintrittsquerschnitt 5 für Reaktionsedukte in den Reaktionsraum 2 teilweise ab. Über elektrische Leitungen 6a, 6b ist sie an eine nicht weiter dargestellte elektrische Energiequelle, beispielsweise eine Kraftfahrzeug-Batterie, angeschlossen. Die Heizvorrichtung 4 hat eine relativ geringe Masse und damit nur eine kleine Wärmekapazität, so daß sie schnell mit relativ geringer Leistung auf eine gewünschte Betriebstemperatur elektrisch aufgeheizt werden kann. Weiter ist die Heizvorrichtung 4 mit Katalysatormaterial belegt, das, sofern die Heizvorrichtung 4 ihre Betriebstemperatur erreicht hat, eine exotherme Reaktion der durch sie strömenden Reaktionsedukte katalysiert. Damit wird über die Heizvorrichtung dem Reaktionsraum 2 eine erhitzte Reaktionseduktmischung zugeführt, die schon etwas reagiert ist. Die hohe Temperatur dieser dem Reaktionsraum zugeführten Reaktionseduktmischung geht zum einen auf die in der Heizvorrichtung 4 elektrisch erzeugte Wärme zurück, zum andern wird jedoch auch durch die exotherme katalytische Reaktion Energie freigesetzt.

Im Austrittsbereich des Heizelementes 4 strömt die erhitzte und teilweise schon reagierte Reaktionseduktmischung in den Reaktionsraum 2 ein, wie in Fig. 1a mit den Pfeilen 7 angedeutet. Damit bildet sich im Reaktionsraum 2 ein Temperaturprofil 8 aus, dem das Heizelement 4 als Wärmequelle am Reaktionsraumeintritt 9 zugrunde liegt. Ausgehend vom Bereich des Heizelementes 4 am Reaktionsraumeintritt 9 wird somit das sich im Reaktionsraum 2 befindliche Katalysatormaterial schnell aufgeheizt, so daß sich die katalytische Reaktion, die in der Heizvorrichtung 4 gestartet wurde, schnell fortsetzt. Dabei wird Wärme sowohl durch Festkörper-Wärmeleitung über das Katalysatormaterial und gegebenenfalls über Trägerstrukturen im Reaktionsraum 2 als auch durch den Massefluß von Reaktionsedukten bzw. Produktgasen im Reaktionsraum 2 transportiert. Die bei der katalytischen Reaktion freigesetzte Energie führt demnach zu einem raschen Aufheizen des gesamten Reaktionsraumes.

Fig. 1b zeigt das Reaktorsystem 1 in einer Normalbetriebsphase. Um die Zufuhr von Reaktionseduktgemisch 3 an die im Reaktionsraum 2 umsetzbare Menge anzupassen, werden, wenn der Reaktionsraum 2 eine optimale Betriebstemperatur erreicht hat, die Reaktionsedukte über den gesamten Eintrittsquerschnitt 5 des Reaktionsraumes 2 zugeführt. Bei Normalbetrieb des Reaktorsystems 1 wird durch den exothermen bzw. autothermen katalytischen Reaktionsablauf im Reaktionsraum 2 genügend Energie freigesetzt, so daß ein Vorheizen von Reaktionsedukten mittels der Heizvorrichtung 4 nicht mehr erforderlich ist. Letztere kann daher abgeschaltet bleiben.

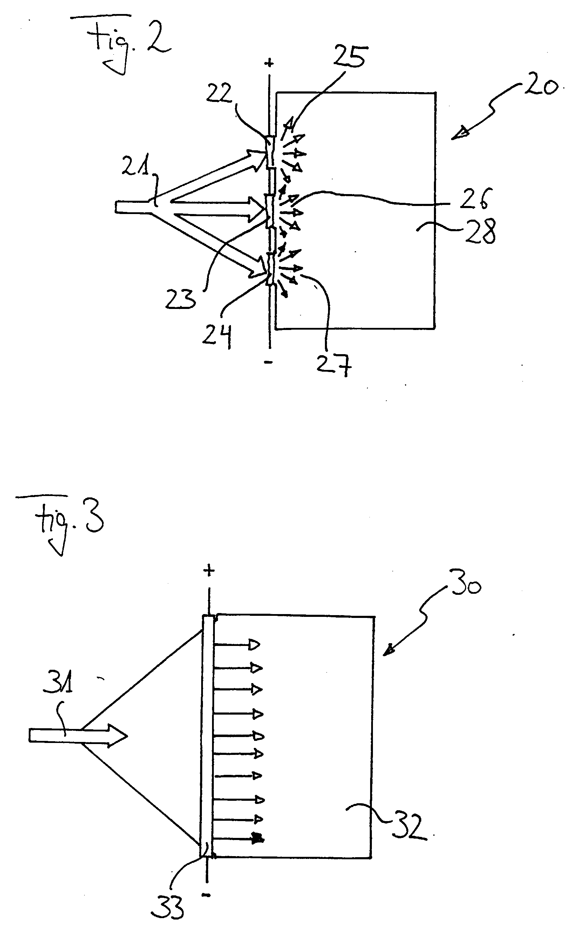

In der Fig. 2 ist ein Reaktorsystem 20 dargestellt, dessen Funktionsweise derjenigen des Systems der Fig. 1a und 1b entspricht. In dem Reaktorsystem 20 ist jedoch eine elektrische Heizvorrichtung vorgesehen, die mehrere eintrittsseitige Heizelemente 22, 23, 24 umfaßt, um einen Reaktionseduktstrom 21 über Reaktionsraumeintritte 25, 26 und 27 einem Reaktionsraum 28 zuzuführen. In einer Startbetriebsphase werden diese Heizelemente 22, 23, 24 mit elektrischer Energie versorgt. Sie bewirken dann an den Reaktionsraumeintritten 25, 26 und 27 umgehend die katalytische Verbrennungsreaktion der zugeführten Reaktionsedukte, so daß sich der dahinterliegende gesamte Reaktionsraum 28 schnell auf eine gewünschte Betriebstemperatur aufheizt. Im Vergleich zum in den Fig. 1a und 1b dargestellten Reaktorsystem ermöglicht das Reaktorsystem 20 aus Fig. 2 mit entsprechend größerer Heizleistung ein schnelleres Aufheizen auf Betriebstemperatur.

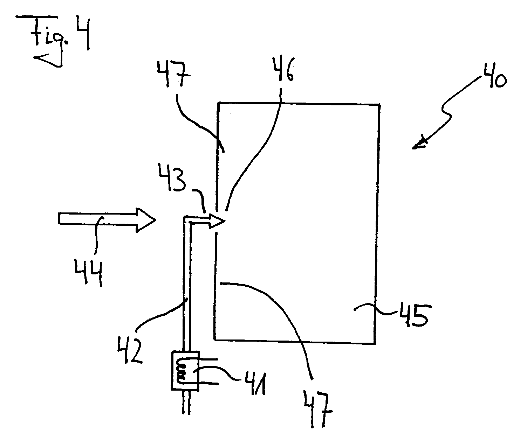

Fig. 3 zeigt ein weiteres Ausführungsbeispiel 30 für ein Reaktorsystem. Hier wird ein Reaktionseduktstrom 31 in einen Reaktionsraum 32 durch eine katalysatorbelegte, elektrisch beheizte Heizscheibe 33 zugeführt. In einer Startbetriebsphase wird diese Heizscheibe 32 mit Energie aus einer nicht weiter dargestellten elektrischen Energiequelle auf eine Temperatur geheizt, die eine katalytische Reaktion von durch sie hindurchtretenden Reaktionsedukten auslöst. Verglichen mit den Ausführungsbeispielen der Fig. 1a, 1b und 2 ist mittels des Reaktorsystems 30 bei größerer Heizleistung eine noch kürzere Startbetriebsphase erzielbar.

In Fig. 4 ist ein Reaktorsystem 40 dargestellt, bei dem in einer Startbetriebsphase eines der Reaktionsedukte, nämlich Luft, mittels einer elektrischen Heizvorrichtung 41 beim Durchströmen einer Zufuhrleitung 42 aufgeheizt wird, um in einem Eintrittsbereich 43 von Reaktionsedukten in einen Reaktionsraum 45 mit dem Kohlenwasserstoff- bzw. Kohlenwasserstoffderivat-Einsatzstoff 44 vermengt zu werden. Das sich auf diese Weise ergebende Reaktionseduktgemisch gelangt damit punktuell, wie gezeigt an einer Stelle oder in nicht gezeigter Weise alternativ an mehreren Stellen, an einem Reaktionsraumeintritt 46 in den Reaktionsraum 45. Es hat aufgrund seines Anteils an erhitzter Luft eine Temperatur, die zunächst das rasche Starten einer katalytischen Verbrennungsreaktion am Katalysatormaterial im Bereich des oder der Lufteindüsstellen am Reaktionsraumeintritt 46 bewirkt. Somit bildet sich, wie anhand des in den Fig. 1a und 1b dargestellten Reaktorsystems erläutert, ausgehend vom Reaktionsraumeintritt 46 mit der punktuellen Luftstrom-Wärmequelle ein Temperaturprofil aus, gemäß dem sich die punktuell eintrittsseitig erzeugte Wärme schnell über den gesamten Reaktionsraum 45 ausbreitet. In einer anschließenden Normalbetriebsphase werden sämtliche Reakionsedukte 43, 44 über den gesamten Eintrittsquerschnitt 47 dem Reaktionsraum 45 zugeführt, wobei die elektrische Heizungsvorrichtung 41 ausgeschaltet ist.

Um dem Reaktionsraum der anhand der Fig. 1a, 1b, 2, 3 und 4 beschriebenen Reaktorsysteme in einer Startbetriebsphase eine stöchiometrische Mischung von Reaktionsedukten, insbesondere von Luft und Kohlenwasserstoff bzw. Kohlenwasserstoffderivat, bereitstellen zu können, ist es bei Bedarf möglich, einen mit Batterieenergie betriebenen Luftverdichter einzusetzen. Grundsätzlich sind die beschriebenen Reaktorsysteme auch einer Temperaturregelung über die jeweiligen Heizvorrichtungen, die sie enthalten, zugänglich. Fällt etwa die Temperatur im Reaktionsraum unter einen vorgegebenen Schwellwert ab, so werden einfach Reaktionsedukte über die betreffenden aktivierten elektrischen Heizvorrichtungen zugeführt. In Analogie zum Betrieb der Reaktorsysteme in einer Startbetriebsphase bewirkt dies einen schnellen Temperaturanstieg. Ist die gewünschte Temperatur erreicht, werden die Heizvorrichtungen wieder ausgeschaltet. Das Reaktorsystem umfaßt möglichst ein schaltbares Reaktionsedukt-Zufuhrsystem, das steuerbare Zufuhrmittel enthält. In einem Startbetriebsmodus des Reaktorsystems wird so ein Reaktionsreduktstrom über einen Teil des Eintrittsquerschnittes dem Reaktionsraum zugeführt. Für den Normalbetriebsmodus wird das Reaktionsedukt-Zufuhrsystem umgeschaltet, und der Reaktionseduktstrom wird über einen gesamten Eintrittsquerschnitt in den Reaktionsraum geleitet.

## Patentansprüche

1. Reaktorsystem zur Umsetzung eines Kohlenwasserstoff- oder Kohlenwasserstoffderivat-Einsatzstoffs mit
- einem katalysatorbelegten Reaktionsraum, dem ein Reaktionseduktstrom über einen Reaktionsraumeintritt zuführbar ist, und
- elektrischen Heizmitteln, die von einer katalysatorbelegten und für den Reaktionseduktstrom (3, 21, 31) durchlässigen elektrischen Heizvorrichtung (4, 22, 23, 24, 33) gebildet sind, durch die hindurch wenigstens in einer Startbetriebsphase des Reaktorsystems (1, 20, 30) Edukte (3, 21, 31) für die Umsetzung des Einsatzstoffs zuführbar sind,
**dadurch gekennzeichnet, daß**
- die elektrische Heizvorrichtung flächig ausgebildet und auf Höhe des Reaktionsraumeintritts (9, 25, 26, 27) dessen Eintrittsquerschnitt (5) wenigstens teilweise abdeckend angeordnet ist.

2. Reaktorsystem nach Anspruch 1,
**dadurch gekennzeichnet, daß**
die Heizvorrichtung mehrere Heizelemente (22, 23, 24) aufweist, die zusammen den Eintrittsquerschnitt des Reaktionsraumes (2) ganz oder teilweise abdecken.

3. Reaktorsystem nach Anspruch 1,
**dadurch gekennzeichnet, daß**
die Heizvorrichtung eine Heizscheibe (33) aufweist, die den Eintrittsquerschnitt des Reaktionsraumes (32) vollständig abdeckt.

4. Reaktorsystem zur Umsetzung eines Kohlenwasserstoff- oder Kohlenwasserstoffderivat-Einsatzstoffs mit
- einem katalysatorbelegten Reaktionsraum, dem ein Reaktionseduktstrom über einen Reaktionsraumeintritt zuführbar ist, und
- elektrischen Heizmitteln, die eine vor dem Reaktionsraumeintritt (46) befindliche elektrische Heizvorrichtung (41) zum Aufheizen wenigstens eines Reaktionseduktes in einer Startbetriebsphase beinhalten,
**dadurch gekennzeichnet, daß**
- die elektrischen Heizmittel Mittel zum punktuellen Einbringen des wenigstens einen in der Heizvorrichtung (41) aufgeheizten Reaktionseduktes in den Reaktionsraum (45) an einer oder mehreren Stellen des Reaktionsraumeintrittsquerschnitts aufweisen.

5. Reaktorsystem nach einem der Ansprüche 1 bis 4,
**dadurch gekennzeichnet, daß**
das Reaktorsystem (1, 20, 30, 40) ein schaltbares Reaktionsedukt-Zufuhrsystem mit Zufuhrmitteln umfaßt, die den Reaktionseduktstrom (3, 21, 31, 44) in einem Startbetriebsmodus nur über einen Teil des Eintrittsquerschnittes (5, 47) in den Reaktionsraum (2, 28, 32, 45) und in einem Normalbetriebsmodus über den gesamten Eintrittsquerschnitt (5, 47) in den Reaktionsraum (2, 28, 32, 45) zuführen.
